(19) Europäisches Patentamt / European Patent Office / Office européen des brevets

(11) **EP 3 970 907 A1**

# (12) EUROPEAN PATENT APPLICATION

(43) Date of publication:
**23.03.2022 Bulletin 2022/12**

(21) Application number: **21198276.4**

(22) Date of filing: **22.09.2021**

(51) International Patent Classification (IPC):
**B23K 35/02** (2006.01)　　**B23K 35/28** (2006.01)
**C22C 21/06** (2006.01)　　**C22C 21/00** (2006.01)

(52) Cooperative Patent Classification (CPC):
**B23K 35/286; B23K 35/0261; B23K 35/288;
C22C 21/00; C22C 21/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2020 US 202063081623 P
13.10.2020 US 202063090867 P
02.09.2021 US 202117446778
01.09.2021 US 202117464535**

(71) Applicant: **Lincoln Global, Inc.
Santa Fe Springs, CA 90670 (US)**

(72) Inventor: **Sengupta, Vivek
Toronto, M4T 3A6 (CA)**

(74) Representative: **Hoyng Rokh Monegier B.V.
Rembrandt Tower, 30th Floor
Amstelplein 1
1096 HA Amsterdam (NL)**

## (54) ALUMINUM-BASED WELDING ELECTRODES

(57) The disclosed technology relates generally to welding, and more particularly to consumable electrodes based on aluminum. In one aspect, a consumable welding electrode comprises a base metal composition comprising magnesium (Mg) and at least 70% by weight of aluminum (Al), and a smut-suppressing metal. A standard free energy change ($\Delta G^o$) of formation of a smut-suppressing oxide by oxidation of the smut-suppressing metal under equilibrium conditions at a temperature of 1600K or higher is more negative than a $\Delta G^o$ of formation of MgO by oxidation of Mg, such that the smut-suppressing metal is configured to form the smut-suppressing oxide that is thermodynamically more favored over MgO on a surface of a weld metal formed from the consumable welding electrode. The smut-suppressing metal is present in an amount of 0.05 - 0.50 % by weight of the consumable welding electrode.

40B

41A

## FIG. 4B

**Description**

**Background**

Field

The disclosed technology relates generally to welding, and more particularly to consumable electrodes based on aluminum and methods of welding using the same.

Description of the Related Art

The engineering use of aluminum and alloys thereof continues to increase because of the various advantageous properties of this unique material. The advantageous features of aluminum and its alloys include light weight, a relatively wide range of tunable strength properties, excellent corrosion resistance, thermal conductivity, reflectivity and widely available shapes and compositions, to name a few.

Owing to these and other properties, aluminum can be an excellent choice for many applications from aerospace to heat exchangers, trailer fabrication and, most recently, automotive body panels and frames. However, welding aluminum can pose unique challenges including suppressing weld defects and improving the performance of the weld metal.

**SUMMARY**

In one aspect, a consumable welding electrode comprises a base metal composition comprising magnesium (Mg) and at least 70% by weight of aluminum (Al), and a smut-suppressing metal. A standard free energy change ($\Delta G°$) of formation of a smut-suppressing oxide by oxidation of the smut-suppressing metal under equilibrium conditions at a temperature of 1600K or higher is more negative than a $\Delta G°$ of formation of MgO by oxidation of Mg, such that the smut-suppressing metal is configured to form the smut-suppressing oxide that is thermodynamically more favored over MgO on a surface of a weld metal formed from the consumable welding electrode. The smut-suppressing metal is present in an amount of 0.05 - 0.50 % by weight of the consumable welding electrode.

In another aspect, a consumable welding electrode comprises a base metal composition comprising magnesium (Mg) and at least 70% by weight of aluminum (Al), and a smut-suppressing metal. The smut-suppressing metal is selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) or a combination thereof. The smut-suppressing metal is present in a compound form selected from an oxide, a halide, a hydroxide, a sulfide, a sulfate, a carbonate, a phosphate, a nitride, a nitrite, a nitride, a carbide, a boride, an aluminide, a telluride or a combination thereof.

In another aspect, a consumable welding electrode comprises a base metal composition comprising magnesium (Mg) and at least 70% by weight of aluminum (Al), and a smut-suppressing metal. A standard free energy change ($\Delta G°$) of formation of a smut-suppressing oxide by oxidation of the smut-suppressing metal under equilibrium conditions at a temperature of 1600K or higher is more negative than a $\Delta G°$ of formation of MgO by oxidation of Mg, such that the smut-suppressing metal is configured to form the smut-suppressing oxide that is thermodynamically more favored over MgO on a surface of a weld metal formed from the consumable welding electrode. The smut-suppressing metal is present in an amount such that upon forming the weld metal, a layer of smut comprising MgO forms on the weld metal, wherein the consumable welding electrode is configured to suppress formation of the layer of smut such that an amount of Mg in the layer of MgO is less than 10% by weight of an amount of Mg in the consumable welding electrode.

In a another aspect, a consumable welding electrode comprises a base metal composition comprising at least 70% by weight of aluminum and a smut-suppressing metal selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) or a combination thereof. The smut-suppressing metal is present in an amount greater than 0.01% by weight.

In another aspect, a consumable welding electrode comprises a base metal composition comprising at least 70% by weight of aluminum and arranged such that forming a weld metal using the base metal composition without a smut-suppressing metal causes formation on a surface thereof smut comprising a layer of deposit having a black, brown or grey color that is visually distinguishable from light reflective bulk of the as-formed weld metal. The consumable welding electrode additionally comprises the smut-suppressing metal selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) or a combination thereof. The smut-suppressing metal is present in form and an amount such that an a weld metal formed using the consumable welding electrode has less amount of smut formed thereon relative to the weld bead formed using the base metal composition without the smut-suppressing metal.

In another aspect, a consumable welding electrode comprises a base metal composition comprising at least 70% by weight of aluminum and a smut-suppressing metal selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) or a combination thereof. The smut-suppressing metal is arranged and present in an amount such that a layer of deposit having a black, brown or grey color that is visually distinguishable from light reflective bulk of a weld metal formed using the consumable welding electrode is reduced by at least 10% by weight relative to a weld metal formed under the same welding conditions and using a reference consumable welding electrode having the same dimensions and amounts of chemical elements as the consumable welding electrode, except for omitted smut-suppressing metal.

## BRIEF DESCRIPTION OF THE DRAWINGS

FIG. 1A is a photograph of an example of weld metal produced using a conventional aluminum-based welding wire.
FIG. 1B is a cross-sectional image of a weld metal showing incomplete fusion.
FIG. 2 is a schematic illustration of an aluminum metal arc welding process.
FIG. 3A is schematic illustration of changes of standard free energy change ($\Delta G°$) of formation versus temperature for two hypothetical oxidation reactions.
FIG. 3B is schematic illustration of the change of standard free energy change ($\Delta G°$) of formation versus temperature for a combined reaction of the two hypothetical oxidation reactions illustrated in FIG. 3B.
FIG. 4A is a schematic illustration of a solid welding wire having a smut-suppressing metal alloyed therein to suppress smut formation, according to embodiments.
FIG. 4B is a schematic illustration of a solid welding wire having a smut - suppressing metal compound mixed therein to suppress smut formation, according to embodiments.
FIG. 4C is a schematic illustration of a coated solid welding wire configured to suppress smut formation, according to embodiments.
FIG. 4D is a schematic illustration of a cored welding wire configured to suppress smut formation, according to embodiments.
FIG. 5 is a flow chart illustrating a method of reducing smut formation during aluminum welding, according to embodiments.
FIG. 6 illustrates a gas metal arc welding (GMAW) system adapted for welding aluminum using a welding wire configured to suppress smut formation, according to embodiments.

## DETAILED DESCRIPTION

The weight of aluminum is about one third that of steel. A cubic inch of aluminum weighs 0.098 lbs./in$^3$ compared to steel, which weighs 0.283 lbs./in$^3$. Aluminum has a wide range of strength properties that vary from 13,000 psi tensile strength for pure aluminum up to 90,000 psi tensile strength for the strongest heat-treatable aluminum alloys. Aluminum provides excellent corrosion resistance in many environments. The thin refractory oxide that forms on the surface of aluminum provides a protective barrier. Aluminum is up to five times more thermally conductive than steel. Aluminum is reflective of radiant heat, and the surface finish of aluminum is frequently used to take advantage of this feature. Due to these and other advantageous properties of aluminum, engineering applications of aluminum continue to grow in number and complexity. Correspondingly, challenges of welding aluminum continues to grow, including suppressing weld defects and improving the properties of the weld metal. In general, aluminum is considered to have comparatively lower weldability than steels due to various reasons, including higher affinity of aluminum towards atmospheric gases, higher thermal expansion coefficient, higher thermal and electrical conductivity, lower rigidity and higher solidification temperature range, among other reasons. These characteristics of aluminum alloys in general can render welding aluminum be more prone to defect formation in the weld metal.

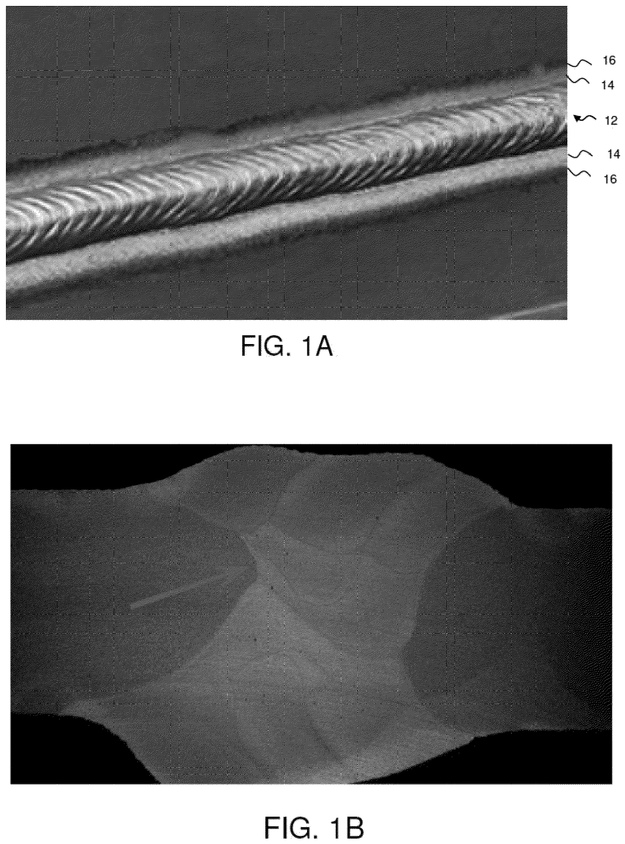

One of the challenges in aluminum welding is reduction of undesirable deposit on the weld metal referred to as smut. Smut refers to a layer of light gray to black material that can be formed on or adjacent to an aluminum-based weld metal. FIG. 1A is an image of an example weld metal produced using a conventional Al-based welding wire. In the illustrated weld metal 12, the weld metal 12 itself is generally bright and shiny, with no gray or black coating on the weld itself. The image also shows a shiny cleaning stripe 14, about 1/16 to 1/8 inch wide, on either side of the weld metal 12. The cleaning stripes 14 indicate the area from which the smut has been removed. The image also shows lines of smut 16 at the outer edges of the cleaning stripes 14. The smut 16 may be present at starts, stops, and at corners. While the illustrated smut 16 is typical, under some circumstances, substantial portions of the weld metal itself may be covered with smut. The smut can be black, brown or grey in color and can substantially cover the surface of the weld metal inhomogeneously.

The formation of smut is undesirable for various reasons. The formation of smut can also be accompanied or cause various defects in the weld metal. FIG. 1B is an example metallographic cross-sectional image of a weld metal showing one of these defects indicated by the arrow, which is referred to as lack of fusion (LOF) defects. The LOF defects in the weld metal can be caused, among other causes. by welding over smut without sufficient interpass cleaning. In addition to such defects that can compromise the performance of the weld metal or cause failures thereof, the smut also reduces the visual appeal of the weld. In addition, removal of the smut requires inter-pass cleaning, which leads to reduced productivity. Also, because the smut contains oxides of alloying elements of the welding wire including Al and Mg, the formation of smut results in loss of these elements to the smut without being recovered. Furthermore, the smut can be removed using a wire brush, either manually or using a power-driven process, either of which can be time consuming and difficult. For these and other reasons, there is a need to reduce or minimize the formation of smut during aluminum welding.

Arc Welding Using Aluminum-Based Welding Wires

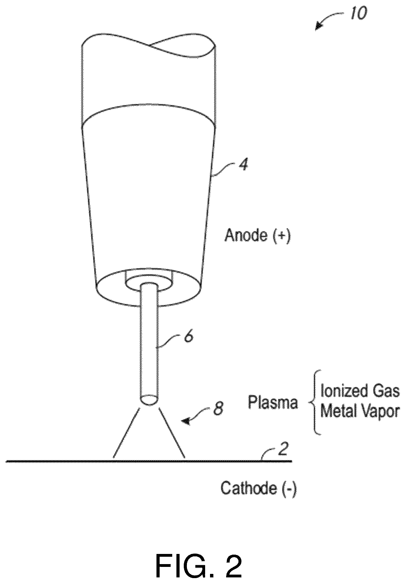

FIG. 2 is a schematic illustration of a configuration of an Al-based welding wire or electrode in metal arc welding processes, according to embodiments. The Al-based welding wire 6 can be configured for suppression of smut formation according to embodiments. In the illustrated metal arc welding, e.g., gas-metal arc welding (GMAW), an electric arc is created between a consumable Al-based welding wire 6, which is electrically connected to one electrode 4 (e.g., anode (+)), and a workpiece 2, which serves as another electrode (e.g., cathode (-)). Thereafter, a plasma 8 is sustained, which contains neutral and ionized gas molecules, as well as neutral and charged clusters or droplets of the material of the Al-based welding wire 6 that have been vaporized by the arc. During welding, the consumable welding wire 6 is advanced toward the workpiece 2, and the resulting molten weld metal droplets formed from the Al-based welding wire 6 deposit onto the workpiece, thereby forming a weld metal or bead.

The Al-based welding wire 6 can be used in various arc welding processes, including gas-metal arc welding processes, which may employ either solid electrode wires (GMAW) or metal-cored wires (GMAW-C). The Al-based welding wire 6 can also be used in flux-cored arc welding processes (FCAW), which can be gas shielded flux-cored arc welding (FCAW-G) or self-shielded flux-cored arc welding (FCAW-S). The Al-based welding wire 6 can further be used in shielded metal arc welding (SMAW) processes and submerged arc welding (SAW) processes, among others.

Smut-Suppressing Aluminum-Based Welding Wire

To address the above noted and other challenges of aluminum welding, the welding wires according to embodiments are configured to substantially suppress the formation of smut during formation of the weld metal. To suppress the formation of smut during welding, the welding wire 6 (FIG. 2) according to embodiments comprises an Al-based base metal composition comprising at least 70% by weight of aluminum and magnesium (Mg), and a smut-suppressing metal. The base metal composition may additionally include any other element that may serve to provide the desired characteristics of the final weld metal, including elements that may overlap those in the work piece. As discussed more *infra,* the inventors have discovered that effective smut-suppressing metals include metals capable forming an oxide that has a stronger thermodynamic driving force of formation compared to the oxides present in the smut. In particular, the inventors have discovered that metals capable of forming an oxide that has a stronger thermodynamic driving force relative to MgO are effective at suppressing the smut formation.

The thermodynamic driving force can be predicted using a standard free energy change ($\Delta G°$) of formation of a smut-suppressing oxide by oxidation of the smut-suppressing metal under equilibrium conditions. The smut-suppressing element can be selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu) thulium (Tm), hafnium (Hf) and gadolinium (Gd). Advantageously, the welding wires according to embodiments substantially reduce the formation of welding smut. Instead, a smut-suppressing oxide may be formed to replace the smut as known in the art. The resulting weld metal may not suffer from the detrimental effects of smut, or the detrimental effects may be significantly mitigated. For example, reduced welding smut as known in the art in turn enables reduction or elimination of inter-pass cleaning, thereby increasing productivity. In a multi-pass weld, lower welding smut can reduce or eliminate defects such as LOF defects. The welding wires according to embodiments also increases the recovery of metal in the welding wire, including Al, Zn and Mg.

The structure and composition of the smut can depend on the chemical composition of the welding wire used. The smut can include oxide(s) of metallic elements in the welding wire. For example, the smut can include oxides of Al, Mg and/or Zn. In some example processes, the smut can include layers or particles, e.g., nanoparticles, of Al, Mg and/or Zn. Without being bound to any theory, the color of the smut, which can be brown, gray or black, can be attributed to light scattering by the particles.

Without being bound to theory, the creation of metal vapor during welding can be attributed to explosive metal transfer. High levels of vapor and molten metal droplets from the wire, known as spatter, can be observed during explosive metal transfer. The explosive metal transfer can in turn depend on the type of welding used and the temperature of the weld droplet. It is believed that a substantial amount of smut may be formed from evaporated metal elements of the welding wire. Without being bound to any theory, it is believed that Mg evaporated from the molten welding wire causes the formation of a substantial amount of the smut having the characteristically brown, gray or black color as described above. While various elements in the molten weld metal can form a respective oxide, physical structure of MgO may render it particularly prone to forming the smut. In particular, MgO has a relatively porous structure. As a result, the porous MgO formed on the droplet surface can be ineffective in suppressing the evaporation of Mg from the molten weld metal. The Mg that is allowed to relatively freely evaporate oxidizes in the welding arc and is believed to cause the formation of the smut, which gets deposited on and around the weld metal.

In recognition of these attributes of smut formation, the inventors have discovered that addition of certain smut-suppressing elements in the welding wire can substantially reduce or eliminate smut formation. According to various embodiments, a consumable welding electrode comprises a base metal composition comprising at least 70% by weight of aluminum and a smut-suppressing metal. As discussed above, the inventors have discovered that effective smut-suppressing metals include metals capable forming an oxide that has a stronger thermodynamic driving force of formation compared to the oxides present in the smut. The inventors have further discovered that the thermodynamic driving force can be predicted using a standard free energy change ($\Delta G°$) of formation of a smut-suppressing oxide by oxidation of the smut-suppressing metal under equilibrium conditions, relative to the $\Delta G°$ of formation of the oxide(s) present in the smut, e.g., MgO.

As used herein, a standard free energy change ($\Delta G°$) refers to the difference between the sum of the free energies of reaction products in their standard states (including a pressure of 1 atm) and the sum of the free energies of the reactants in their standard states. The inventors have discovered that a comparison of $\Delta G°$. The $\Delta G°$ can be represented as:

$$\Delta G^o(T) = \Delta H^o(T) - T\Delta S^o(T)$$

where $\Delta H°$ and $\Delta S°$ are standard enthalpy and entropy changes of formation.

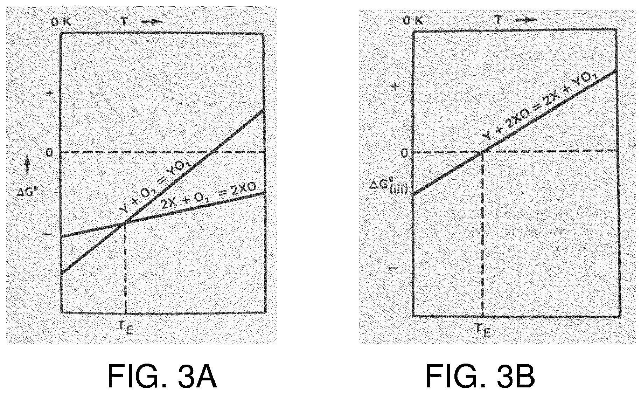

Identification of smut-suppressing metals that have a higher thermodynamic oxidation driving force relative to smut-forming metals (e.g., Mg) contained in the welding electrode is described in reference to FIGS. 3A and 3B, without being bound to any theory. FIG. 3A is schematic illustration of changes of standard free energy change ($\Delta G°$) of formation versus temperature for two hypothetical oxidation reactions. FIG. 3B is schematic illustration of the change of standard free energy change ($\Delta G°$) of formation versus temperature for a combined reaction of the two hypothetical oxidation reactions illustrated in FIG. 3B. FIG. 3A schematically shows two hypothetical oxidation reactions, e.g.:

$$2X + O_2 = 2XO \qquad (i)$$

and

$$Y + O_2 = YO_2 \qquad (ii)$$

From FIG. 3A, it can be seen that $\Delta H_o(ii)$ is more negative than $\Delta H_o(i)$ and that $\Delta S_o(ii)$ is more negative than $\Delta S_o(i)$. Subtraction of reaction (i) from reaction (ii) gives

$$Y + 2XO = 2X + YO_2 \qquad (iii)$$

for which the variation of $\Delta G°$ with T is as shown in FIG. 3B. Below an equilibrium temperature $T_E$, X and $YO_2$ are stable with respect to Y and XO, and above $T_E$ the reverse is the case. At $T_E$, X, Y, XO, and $YO_2$, occurring in their standard states, are in equilibrium with one another. The equilibrium at $T_E$ (as with any equilibrium) results from a compromise between enthalpy and entropy considerations. As $\Delta H°$ (iii) is negative (being equal to $\Delta H°(ii) - \Delta H°(i)$) and $\Delta S°$ (iii) is negative (being equal to $\Delta S°(ii) - \Delta S°(i)$), the system $X + Y + O_2$ has minimum enthalpy when it occurs as $X + YO_2$ and has maximum entropy when it occurs as $Y + XO$. At $T_E$, $\Delta H°(iii)$ equals $T\Delta S°(iii)$, and hence $\Delta G°(iii)$ equals zero. Below $T_E$ the enthalpy contribution to $\Delta G°(iii)$ outweighs the entropy contribution, and hence $\Delta G°(iii)$ is negative such that $X + YO_2$ is the stable state. Above $T_E$ the reverse is the case, and $\Delta G°(iii)$ is positive and $Y + XO$ is the stable state. FIG.

3B thus shows that if pure X were to be used as a reducing agent to reduce the pure oxide $YO_2$ to form pure Y and pure XO, then the reduction would be affected at temperatures in excess of $T_E$.

Still referring to FIGS. 3A and 3B, Y can represent a smut-forming metal that would normally form smut, e.g., Mg, and X can represent a smut-suppressing metal. Likewise, $YO_2$ can represent an oxide of the smut-forming metal, e.g., MgO, and XO can represent a smut-suppressing oxide of the smut-suppressing metal. While the lines represented by the two reactions (i) and (ii) do not necessarily have to intersect, where they do, the temperature at which the molten weld metal and smut are formed corresponds to the temperature greater than $T_E$. Thus, the $\Delta G°$ (i) representative of formation of the smut-suppressing oxide is more negative relative to the $\Delta G°$ (ii) representative of formation of the smut. The inventors have found that a consideration similar to that discussed above with respect to FIGS. 3A and 3B should be performed for temperatures equal to or greater than about 1600K, in order for such consideration to provide an accurate indication of actual welding conditions. Thus, according to various embodiments, a standard free energy change ($\Delta G°$) of formation of a smut-suppressing oxide by oxidation of the smut-suppressing metal under equilibrium conditions at a temperature of 1600K or higher is more negative than a $\Delta G°$ of formation of MgO by oxidation of Mg. As such, the smut-suppressing metal is configured to form the smut-suppressing oxide that is thermodynamically more favored over MgO on a surface of a weld metal formed from the consumable welding electrode. Thus, instead of the smut known in the industry to cause visual and structural defects discussed above, a smut-suppressing oxide may be formed. The weld metal having the smut-suppressing oxide formed thereon to replace the smut as known in the art may not suffer from the above-discussed defects caused by MgO, or the above-discussed defects may be significantly mitigated. The inventors have discovered that the smut-suppressing metals that have more negative $\Delta G°$ of oxide formation than MgO can substantially suppress the formation of MgO on the droplet surface. As described above, MgO can form as a porous layer and be ineffective in suppressing the evaporation of Mg from the molten weld metal and forming the smut. In the presence of a smut-suppressing metal as described herein, a relatively pure and continuous (non-porous) smut-suppressing oxide layer can form on the weld metal, or a continuous (non-porous) composite oxide layer with magnesium oxide can form on the droplet surface. The weld metal formed using the welding electrode according to embodiments can be covered with a layer of the smut-suppressing oxide that is substantially non-porous. For example, less than 20%, 10%, 5%, 2%, 1%, or a value in range defined by any of these values, of the surface area over the weld metal may be occupied by pores, according to embodiments. Thus formed smut-suppressing oxide can effectively suppress Mg from evaporating from the molten weld metal and forming the smut.

As a further consideration of physical cause of smut formation, without being bound to any theory, the smut may form during welding from condensation of vaporized metal elements from wire. As such, the composition of the smut can be related to the boiling points of metal elements in the welding wire and/or the boiling point of the base metal composition. Thus, elements having relatively low boiling points can more easily form smut. For example, the boiling point of aluminum is about 2470 °C, compared to 1090 °C and 910 °C for magnesium and zinc, respectively. Thus, when normalized for the amount of each element in the welding wire, the smut can have relatively higher amounts of magnesium and zinc relative to aluminum when all of them are present in the welding wire. In consideration of this, according to some embodiments, the smut-suppressing metal desirably has a relatively high boiling point. For example, the boiling point of the smut-suppressing metal is higher than that of at least Mg and optionally that of Zn and Al.

The inventors have discovered that, when present in amounts and form described herein, the smut-suppressing metal can reduce the amounts of evaporated metal elements of the base metal. Without being bound to any theory, this can occur by, e.g., increasing the evaporation temperature of the molten base metal. In addition to or alternatively, the smut-suppressing element can form a protective coating during welding such that evaporation of the elements of the base metal composition is substantially suppressed from forming the smut. Accordingly, in some embodiments, an as-formed weld metal formed using the consumable welding electrode according to embodiments has formed on a surface thereof an oxide of the smut-suppressing metal, which can be later removed.

The base metal composition can have a composition according to a system of four-digit numbers has been developed by the Aluminum Association, Inc., to designate the various wrought aluminum alloy types. The base metal composition can include one of, e.g.:

In recognition of these attributes of competing oxidation processes for reducing smut, the inventors have discovered that addition of certain smut-suppressing elements in certain effective amount as part of the welding wire can substantially reduce the smut formation. According to various embodiments, the consumable welding electrode comprises a base metal composition comprising at least 70% by weight of aluminum and a smut-suppressing metal.

The base metal composition can have a composition that is similar to the workpiece to be welded. The base metal composition can include any composition that is known in the art according to a system of four-digit numbers that have been developed by the Aluminum Association, Inc., to designate the various wrought aluminum alloy types. The base metal composition can include one or more of, e.g.:

1XXX series: These are aluminums of 99 percent or higher purity which are used primarily in the electrical and chemical industries. These alloys are usually used for their electrical conductivity and/or corrosion resistance. Their sensitivity to hot cracking is very low.

2XXXseries. Copper is the principal alloy in this group, which provides extremely high strength when properly heat treated. These alloys may not produce as good corrosion resistance and are often clad with pure aluminum or special-alloy aluminum. These alloys are used in the aircraft industry.

3XXX series. Manganese is the major alloying element in this group, which is non-heat-treatable. Manganese content can be less than about 2.0 percent. These alloys have moderate strength and can be easily worked. These moderate strength aluminum-manganese alloys are relatively crack resistant.

4XXX series. Silicon is the major alloying element in this group. It can be added in sufficient quantities to substantially reduce the melting point and is used for brazing alloys and welding electrodes. Most of the alloys in this group are non-heat-treatable.

5XXX series. Magnesium is the major alloying element of this group, which are alloys of medium strength. They possess good welding characteristics and good resistance to corrosion, but the amount of cold work should be limited. These higher strength aluminum-magnesium alloys are the most common structural aluminum sheet and plate alloys. This series has the highest strength of the non-heat-treatable aluminum alloys. They are used in chemical storage tanks and pressure vessels as well as structural applications, railway cars, dump trucks and bridges, because of its superior corrosion resistance.

6XXX series. Alloys in this group contain silicon and magnesium, which make them heat treatable. These alloys possess medium strength and good corrosion resistance. This medium strength, heat-treatable series is primarily used in automotive, pipe, railings and structural extrusion applications.

7XXX series. Zinc is the major alloying element in this group. Magnesium is also included in most of these alloys. Together, they form a heat-treatable alloy of very high strength, which is used for aircraft frames. It is primarily used in the aircraft industry. The weldability of the 7XXX series may be compromised in higher copper grades, as many of these grades are crack sensitive due to wide melting ranges and low solidus melting temperatures. They are widely used for bicycle frames and other extruded application.

According to various embodiments, the consumable welding electrode comprises a base metal composition comprising at least 70% by weight of aluminum and additional elements such that an as-formed weld metal formed using the base metal composition, without a smut suppressing metal, has formed on a surface thereof a smut comprising a layer of deposit having a black, brown or grey color that is visually distinguishable from light reflective bulk of the as-formed weld metal. The base metal composition of the welding wires according to various embodiments disclosed herein can include Mn in a weight percentage of, on the basis the total weight of the welding wire, 0.01-0.02%, 0.02-0.05%, 0.05-0.10%, 0.1-0.2%, 0.2-0.5%, 0.5-1.0%, 1.0-1.5%, 1.5-2.0%, or a value in a range defined by any of these values; Si in a weight percentage of, on the basis the total weight of the welding wire, 0.1-0.2%, 0.2-0.5%, 0.5-1.0%, 1.0-2.0%, 2.0-5.0%, 5.0-10%, 10-15%, 15-20%, or a value in a range defined by any of these values; Fe in a weight percentage of, on the basis of the total weight of the welding wire, 0.02-0.05%, 0.05-0.10%, 0.1-0.2%, 0.2-0.5%, 0.5-1.0%, or a value in a range defined by any of these values; Mg in a weight percentage of, on the basis the total weight of the welding wire, 0.1-0.2%, 0.2-0.5%, 0.5-1.0%, 1.0-2.0%, 2.0-5.0%, 5.0-10%, or a value in a range defined by any of these values; Cr in a weight percentage of, on the basis the total weight of the welding wire, 0.01-0.02%, 0.02-0.05%, 0.05-0.10 %, 0.1-0.2%, 0.2-0.5%, 0.5-1.0%, or a value in a range defined by any of these values; Cu in a weight percentage of, on the basis the total weight of the welding wire, 0.01-0.02%, 0.02-0.05%, 0.05-0.10%, 0.1-0.2%, 0.2-0.5%, 0.5-1.0%, 1.0-2.0%, 2.0-5.0%, 5.0-10%, or a value in a range defined by any of these values; Ti in a weight percentage of, on the basis of the total weight of the welding wire, 0.02-0.05%, 0.05-0.10 %, 0.1-0.2%, 0.2-0.5%, 0.5-1.0%, or a value in a range defined by any of these values; Zn in a weight percentage of, on the basis of the total weight of the welding wire, 0.05-0.10%, 0.1-0.2%, 0.2-0.5%, 0.5-1.0%, or a value in a range defined by any of these values; and Al in a weight percentage of, on the basis of the total weight of the welding wire, 70-75 %, 70-75%, 75-80%, 80-85%, 85-90%, 90-95%, 95-99.9%, or a value in a range defined by any of these values, which can be the balance of the welding wire or the base metal composition. It will be appreciated that, while the smut may predominantly include Mg, Al and Zn, it may also contain any other element that may be present in the base metal.

According to various embodiments, the consumable welding electrode comprises a smut-suppressing metal is present in form and an amount such that an as-formed weld metal formed using the consumable welding electrode according to embodiments has less amount of smut formed thereon relative to the as-formed weld bead formed using a consumable welding electrode that only has the base metal composition without the smut-suppressing metal. For example, the smut-suppressing metal is arranged and present in an amount such that a layer of deposit having a black, brown or grey color that is visually distinguishable from light-reflective bulk of an as-formed weld metal is reduced by at least 10% by weight relative to a weld bead formed under substantially the same welding conditions and using a reference consumable welding electrode having the same dimensions and amounts of chemical elements as the consumable welding electrode, except for the smut-suppressing metal, which is omitted.

TABLE 1 below shows example smut-suppressing metals, corresponding smut-suppressing oxides and $\Delta G°$

at 1600K, based on which the smut formation can be substantially suppressed in Al-welding.

TABLE 1

| Smut-Suppressing Element | Smut-Suppressing Oxide | Standard Gibb's Free Energy of Formation of Smut-Suppressing Oxide ($\Delta G°$) at 1600K (kcal/gfw) |
|---|---|---|
| | | |
| Lu | $Lu_2O_3$ | -225 |
| Ho | $Ho_2O_3$ | -228 |
| Ca | CaO | -225 |
| Be | BeO | -210 |
| Hf | $HfO_2$ | -193 |
| Er | $Er_2O_3$ | -214 |
| Dy | $Dy_2O_3$ | -224 |
| Gd | $Gd_2O_3$ | -218 |
| Sr | SrO | -207 |
| Tb | $Tb_2O_3$ | -225 |
| Sc | $Sc_2O_3$ | -230 |
| Tm | $Tm_2O_3$ | -228 |
| Th | $ThO_2$ | -220 |
| Y | $Y_2O_3$ | -230 |
| Sm | $Sm_2O_3$ | -218 |
| Pr | $Pr_2O_3$ | -222 |
| Yb | $Yb_2O_3$ | -215 |
| Eu | EuO | -225 |
| Ce | $Ce_2O_3$ | -212 |

The smut-suppressing metal is selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) and combinations thereof. As shown in TABLE 1, for each of these smut-suppressing metals, a standard free energy change ($\Delta G°$) of formation of the corresponding smut-suppressing oxide by oxidation of the smut-suppressing metal under equilibrium conditions at the calculated temperature of 1600K or higher is more negative than a $\Delta G°$ of formation of MgO by oxidation of Mg. As such, the smut-suppressing metal is configured to form the smut-suppressing oxide that is thermodynamically more favored over MgO on a surface of a weld metal formed from the consumable welding electrode.

In some particular embodiments, the smut-suppressing metal is configured to form the smut-suppressing oxide under equilibrium conditions at a standard Gibbs free energy of formation ($\Delta G°$) of <-192 kilo calories (kcal) per grams per formula weight (gfw) and >-215 kcal/gfw at 1600 K. In these embodiments, the smut-suppressing metal is selected from the group consisting of beryllium (Be), hafnium (Hf), erbium (Er), strontium (Sr), cerium (Ce) or a combination thereof.

In some particular embodiments, the smut-suppressing metal is configured to form the smut-suppressing oxide under equilibrium conditions at a standard Gibbs free energy of formation ($\Delta G°$) of $\leq$-215 kcal/gfw and >-225 kcal/gfw. In these embodiments, the smut-suppressing metal is selected from the group consisting of gadolinium (Gd), dysprosium (Dy), thorium (Th), samarium (Sm), praseodymium (Pr), ytterbium (Yb) or a combination thereof.

In some particular embodiments, the smut-suppressing metal is configured to form the smut-suppressing oxide under equilibrium conditions at a standard Gibbs free energy of formation ($\Delta G°$) of $\leq$-225 kcal/gfw. In these embodiments, the smut-suppressing metal is selected from the group consisting of lutetium (Lu), holmium (Ho), calcium (Ca), terbium (Tb), scandium (Sc), thulium (Tm), yttrium (Y), europium (Eu) or a combination thereof.

It will be appreciated that the amount of the smut-suppressing metal present in the welding wire should be kept at a relatively small amount but in an amount sufficient to effectively and substantially reduce or suppress the formation of smut. As such, in some embodiments, the amount of the smut-suppressing metal exceeds 1%, 5%, 10%, 20%, 50%. 100%, 150%, 200%, or a value in a range defined by any of these values, of the amount of one or more the smut-forming elements described above that may be present in the consumable welding electrode, including Mg and/or Zn.

The welding wire can include one or more of these elements as the smut-suppressing metal, on the basis the total weight of the welding wire, 0.01-0.02%, 0.02-0.05%, 0.05-0.10 %, 0.1-0.2%, 0.2--0.5%, 0.5-1.0%, 1.0-1.5%. 1.5-2.0%, 2.0-2.5%, 2.5-3.0%, 3.0-3.5%, 3.5-4.0%, 4.0-4.5%, 4.5-5.0%, or a value in a range defined by any of these values, for instance 0.05 - 0.50 %.

In some embodiments, the consumable welding electrode is configured such that upon forming a weld metal, a layer of smut comprising MgO forms on the weld metal despite the presence of the smut-suppressing metal. However, because the consumable welding electrode is configured to suppress formation of the layer of smut, the amount of Mg in the layer of smut can be kept relatively small. Similarly, when the base metal composition further comprises zinc (Zn) and the smut further comprises ZnO, the consumable welding electrode is configured such that the amount of Zn in the layer of smut can be kept relatively small. For example, the amount of Mg and/or Zn in the layer of smut may be less than 50%, 30%, 10%, 5%, 1% by weight, or a percentage in a range defined by any of these values, of the amount of Mg and/or Zn in the consumable welding electrode.

In some of these embodiments, the smut-suppressing metal may be present in elemental metal form. In some other of these embodiments, the smut-suppressing metal may be present in the form of an oxide, halide, hydroxide, sulfide, sulfate, carbonate, phosphate, nitride, nitrite, nitride, carbide, boride, aluminide, telluride or a combination thereof.

Structure of Welding Electrode Configured for Smut-Suppression

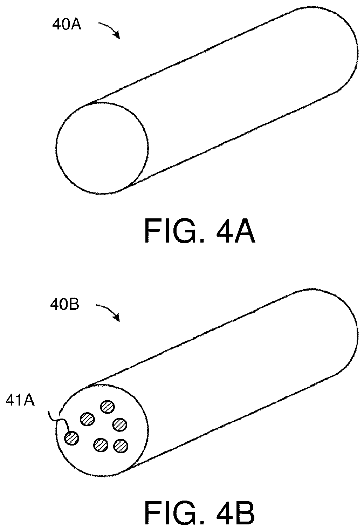

FIG. 4A is a schematic illustrations of a solid welding wire 40A configured to suppress formation of smut, according to embodiments. In the illustrated embodiment, the smut-suppressing metal maybe alloyed with the base metal composition, e.g., to form a solid solution, such that the smut-suppressing metal as present may form metallic bonds with aluminum and other metal elements of the base metal composition as described above. In these embodiments, the consumable welding electrode is a solid wire comprising a homogenous solution or mixture, e.g., an alloy, formed by the base metal composition and the smut-suppressing metal.

FIG. 4B is a schematic illustrations of a solid welding wire 40B configured to suppress formation of smut, according to some other embodiments. Unlike the solid welding wire 40A (FIG. 4A), in the embodiment illustrated in FIG. 4B, the smut-suppressing metal maybe be present in the form of a compound such as an oxide, halide, hydroxide, sulfide, sulfate, carbonate, phosphate, nitride, nitrite, nitride, carbide, boride, aluminide, telluride or a combination thereof. In these embodiments, the consumable welding electrode is a solid wire comprising a heterogenous mixture formed by the base metal composition and the compound of the smut-suppressing metal. The compound of the smut-suppressing metal may be present, e.g., in powder form that is dispersed within a matrix of the base metal composition.

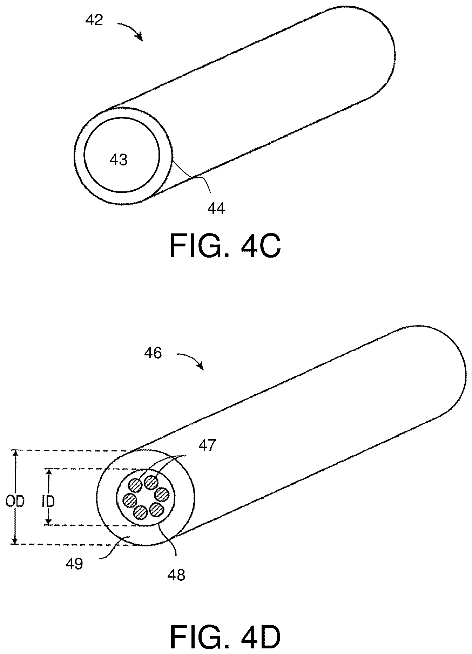

FIG. 4C is a schematic illustration of a coated solid welding wire 42 configured to suppress formation of smut, according to embodiments. FIG. 4D is a schematic illustration of a cored welding wire 46 configured to suppress formation of smut, according to embodiments. In these embodiments, the smut-suppressing metal may be chemically and/or physically separated from the base metal composition. For example, in the welding wire 42 (FIG. 4C), the smut-suppressing metal may be present as a coating 44 formed on the outer surface of a core wire 43 formed of the base metal composition. The coating 44 can include the smut-suppressing metal in elemental, alloy or compound in a suitable form, e.g., a powder form. Alternatively, in the illustrated embodiment of FIG. 4D, the consumable welding wire 46 may be a cored wire comprising a core 48 and a sheath 49, wherein the core 48 comprises the smut-suppressing metal, e.g., in powder form 47, and the sheath 49 comprises the base metal composition.

Method of Suppressing Smut Formation

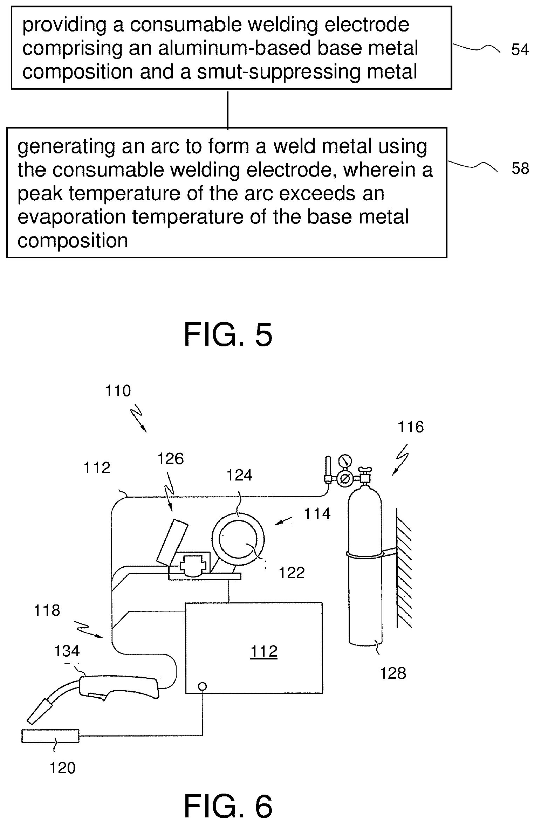

FIG. 5 is a flow chart illustrating a method of reducing smut formation during aluminum welding, according to embodiments. The method includes providing 54 a consumable welding electrode comprising an aluminum-based based metal composition and a smut-suppressing metal, wherein a standard free energy change ($\Delta G°$) of formation of a smut-suppressing oxide by oxidation of the smut-suppressing metal under equilibrium conditions at a temperature of 1600K or higher is more negative than a $\Delta G°$ of formation of MgO by oxidation of Mg, such that the smut-suppressing metal is configured to form the smut-suppressing oxide that is thermodynamically more favored over MgO on a surface of a weld metal formed from the consumable welding electrode. The smut-suppressing metal may be selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) or a combination thereof. The consumable welding electrode can be according to any one of the above-described embodiments. The method additionally includes generating 58 an arc to form a weld bead using the consumable welding electrode, wherein a peak temperature of the arc exceeds an evaporation temperature of the base metal composition. For example, the arc temperature is sufficient to evaporate at least aluminum from the base metal composition. The method illustrated in FIG. 5 can be implemented in any suitable welding process, including gas-metal arc welding processes described below by way of example.

In gas-metal arc welding using solid (GMAW) or metal-cored electrodes (GMAW-C), a shielding gas is used to provide protection for the weld pool and the weld bead against atmospheric contamination during welding. When solid electrodes are used, they are appropriately alloyed with active ingredients that, in combination with the shielding gas, may be designed to suppress smut formation as described above while also providing low porosity or porosity-free welds with the desired physical and mechanical properties of the resulting weld metal. When metal-cored electrodes are used, some of the active ingredients including a smut-suppressing metal may be added in the core of the cored wire, and designed to provide a similar function as in the case of solid electrodes.

Solid and metal-cored electrodes are designed to provide, under appropriate gas shielding, a solid, substantially porosity-free weld metal with yield strength, tensile strength, ductility and impact toughness to perform satisfactorily in the final applications. These electrodes may also be designed to minimize the quantity of slag generated during welding. For some applications, metal-cored electrodes can be used as an alternative to solid wires to increase productivity. As described herein, metal-cored electrodes refer to composite electrodes having a core that is at least partially filled and surrounded by a metallic outer sheath. The core can include metal powder and active ingredients to help with arc stability, weld wetting and appearance and desired physical and mechanical properties. The metal-cored electrodes are manufactured by mixing the ingredients of the core material and depositing them inside a formed strip, and then closing and drawing the strip to the final diameter. For some applications, cored electrodes can provide increased deposition rates and a wider, relatively consistent weld penetration profile compared to solid electrodes. As described herein, metal-cored electrodes (GMAW-C) refer to electrodes having a core whose ingredients are primarily metallic. When present, nonmetallic components in the core have a combined concentration less than 5%, 3% or 1%, on the basis of the total weight of each electrode. The relatively low nonmetallic components may distinguish GMAW-C electrodes from flux-cored arc welding electrodes described in more detail, infra. The GMAW-C electrodes can be characterized by a spray arc and high quality weld metal.

Similar to gas-metal arc welding using metal-cored electrodes (GMAW-C), electrodes used in flux-cored arc welding (FCAW, FCAW-S, FCAW-G) also include a core surrounded by a shell. That is, the cored electrodes used in flux-cored arc welding have a core that is at least partially filled and surrounded by a metallic outer sheath, similar to metal-cored electrodes described above. However, unlike metal-cored electrodes (GMAW-C), the cored electrodes used in flux-cored arc welding (FCAW) additionally includes fluxing agents designed to provide protection for the weld pool and the weld bead against atmospheric contamination during welding, at least partially in lieu of a shielding gas. The cored electrodes used in flux-cored arc can additionally include other active ingredients to help with arc stability, weld wetting and appearance and desired physical and mechanical properties. In one aspect, flux-cored arc electrodes may be distinguished from metal-cored electrodes by the amount of nonmetallic components present in the core, whose combined concentration can be less than 5%, 3% or 1%, on the basis of the total weight of each electrode.

A large number of fluxing agent compositions for flux-cored electrodes have been developed to control the arc stability, modify the weld metal composition, and to provide protection from atmospheric contamination. In flux-cored electrodes, arc stability may be controlled by modifying the composition of the flux. As a result, it may be desirable to have substances which serve well as plasma charge carriers in the flux mixture. In some applications, fluxes can also modify the weld metal composition by rendering impurities in the metal more easily fusible and providing substances with which these impurities may combine. Other materials are sometimes added to lower the slag melting point, to improve slag fluidity, and to serve as binders for the flux particles. Various wires used in FCAW may share some similar characteristics, e.g., forming a protective slag over the weld, using a drag angle technique, having the ability to weld out-of-position or flat and horizontal at higher deposition rates, having the ability to handle relatively higher amount of contaminants on the plate, etc. On the other hand, different types of flux-cored arc welding processes exist, namely: self-shielded flux-cored arc welding (FCAW-S) and gas-shielded flux-cored arc welding (FCAW-G).

FIG. 6 schematically illustrates an example gas metal arc welding (GMAW) system 110 configured for aluminum-based welding wires according to embodiments. The GMAW system 110 includes an electrical power source 112, a wire drive assembly 114, a shielding gas supply system 116, and a cable assembly 118 for delivering electrical power, a welding wire in a spool 124 and a shielding gas in a shield gas source 128 configured to be delivered to a workpiece 120 to be welded. The wire drive assembly 114 typically includes a reel stand 122 for carrying the spool 124 including a continuous consumable wire electrode as well as a drive mechanism 126 including one or more drive wheels (not shown) for driving the welding wire from the spool 124 through the cable assembly 118 to the workpiece 120. The shielding gas supply system 116 normally includes a shielding gas source 128 and a gas supply conduit 130 in fluid communication with cable assembly 118. As illustrated in FIG. 6, the cable assembly 118 typically includes an elongated flexible cable 132 attached on one end to the power source 112, the wire drive assembly 114 and the gas supply system 116, and on the other end to a weld gun 134.

Additional Examples

Embodiment 1: A consumable welding electrode, comprising:

a base metal composition comprising at least 70% by weight of aluminum; and
a smut-suppressing metal selected from the group consisting of calcium (Ca), strontium (Sr), scandium (Sc), beryllium (Be), yttrium (Y), terbium (Tb), europium (Eu), cerium (Ce), lithium (Li), praseodymium (Pr), ytterbium (Yb), holmium (Ho), erbium (Er), lanthanum (La), dysprosium (Dy), samarium (Sm), thorium (Th), lutetium (Lu) thulium (Tm) or a combination thereof,
wherein the smut-suppressing metal is present in an amount greater than 0.01% by weight.

Embodiment 2: A consumable welding electrode, comprising:

a base metal composition comprising at least 70% by weight of aluminum and arranged such that forming a weld metal using the base metal composition without a smut-suppressing metal causes formation on a surface thereof smut comprising a layer of deposit having a black, brown or grey color that is visually distinguishable from light reflective bulk of the as-formed weld metal; and
the smut-suppressing metal selected from the group consisting of calcium (Ca), strontium (Sr), scandium (Sc), beryllium (Be), yttrium (Y), terbium (Tb), europium (Eu), cerium (Ce), lithium (Li), praseodymium (Pr), ytterbium (Yb), holmium (Ho), erbium (Er), lanthanum (La), dysprosium (Dy), samarium (Sm), thorium (Th), lutetium (Lu) thulium (Tm) or a combination thereof,
wherein the smut-suppressing metal is present in form and an amount such that an a weld metal formed using the consumable welding electrode has less amount of smut formed thereon relative to the weld bead formed using the base metal composition without the smut-suppressing metal.

Embodiment 3: A consumable welding electrode, comprising:

a base metal composition comprising at least 70% by weight of aluminum; and
a smut-suppressing metal selected from the group consisting of calcium (Ca), strontium (Sr), scandium (Sc), beryllium (Be), yttrium (Y), terbium (Tb), europium (Eu), cerium (Ce), lithium (Li), praseodymium (Pr), ytterbium (Yb), holmium (Ho), erbium (Er), lanthanum (La), dysprosium (Dy), samarium (Sm), thorium (Th), lutetium (Lu) thulium (Tm) or a combination thereof,
wherein the smut-suppressing metal is arranged and present in an amount such that a layer of deposit having a black, brown or grey color that is visually distinguishable from light reflective bulk of a weld metal formed using the consumable welding electrode is reduced by at least 10% by weight relative to a weld metal formed under the same welding conditions and using a reference consumable welding electrode having the same dimensions and amounts of chemical elements as the consumable welding electrode, except for omitted smut-suppressing metal.

Embodiment 4: The consumable welding electrode of any one of the above Embodiments, wherein an as-formed weld metal formed using the consumable welding electrode has formed on a surface thereof an oxide of the smut-suppressing metal.
Embodiment 5: The consumable welding electrode of any one of the above embodiments, wherein the base metal composition further comprises one or both of zinc (Zn) and magnesium (Mg) as alloying elements for alloying with aluminum in the weld metal bead formed using the consumable welding electrode.
Embodiment 6: The consumable welding electrode of any one of the above Embodiments, wherein the smut-suppressing metal is present in an amount of 0.01-5.0 wt. % on the basis of the total weight of the consumable welding electrode.
Embodiment 7: The consumable welding electrode of any one of the above Embodiments, wherein the smut-suppressing metal is present in elemental metal form.
Embodiment 8: The consumable welding electrode of any one of the above Embodiments, wherein the smut-suppressing metal is present in a compound selected from an oxide, a halide, a hydroxide, a sulfide, a sulfate, a carbonate, a phosphate, a nitride, a nitrite, a nitride, a carbide, a boride, an aluminide, a telluride or a combination thereof.

Embodiment 9: The consumable welding electrode of any one of the above Embodiments, wherein the consumable welding electrode is configured such that, when present on a weld metal formed from the consumable welding electrode under a welding condition, the smut comprises aluminum oxide.

Embodiment 10: The consumable welding electrode of any one of the above Embodiments, wherein the consumable welding electrode is configured such that, when present on a weld metal formed from the consumable welding electrode under a welding condition, the smut comprises aluminum oxide and one or both of magnesium oxide and zinc oxide. Embodiment 11: The consumable welding electrode of one of Embodiments 9-10, wherein the welding condition is a gas metal arc welding (GMAW) condition.

Embodiment 12: The consumable welding electrode of any one of the above Embodiments, wherein the consumable welding electrode comprises a core wire comprising the base metal composition and a coating comprising the smut-suppressing metal surrounding the core wire.

Embodiment 13: The consumable welding electrode of any one of Embodiments 1-12, wherein the consumable welding electrode is a cored wire comprising a core and a sheath, wherein the core comprises the smut-suppressing metal and the sheath comprises the base metal composition.

Embodiment 14: The consumable welding electrode of any one of Embodiments 1-12, wherein the consumable welding electrode is solid wire comprising a homogenous mixture of the base metal composition and the smut-suppressing metal.

Embodiment 15: A method of welding an aluminum workpiece, comprising:

   providing a consumable welding electrode comprising an aluminum-based base metal composition and a smut-suppressing metal selected from the group consisting of calcium (Ca), strontium (Sr), scandium (Sc), beryllium (Be), yttrium (Y), terbium (Tb), europium (Eu), cerium (Ce), lithium (Li), praseodymium (Pr), ytterbium (Yb), holmium (Ho), erbium (Er), lanthanum (La), dysprosium (Dy), samarium (Sm), thorium (Th), lutetium (Lu) and thulium (Tm); and

   generating an arc to form a weld metal using the consumable welding electrode, wherein a peak temperature of the arc exceeds an evaporation temperature of the base metal composition.

Embodiment 16: The method of welding according to Embodiment 15, wherein the consumable welding wire is according to any one of Embodiments 1-14.

Embodiment 17: The method of welding according to Embodiments 15 or 16, further comprising forming an oxide of the smut-suppressing metal over a weld metal puddle formed from the base metal composition.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

**Claims**

1. A consumable welding electrode, comprising:

   a base metal composition comprising magnesium (Mg) and at least 70% by weight of aluminum (Al); and
   a smut-suppressing metal, wherein a standard free energy change ($\Delta G°$) of formation of a smut-suppressing oxide by oxidation of the smut-suppressing metal under equilibrium conditions at a temperature of 1600K or higher is more negative than a $\Delta G°$ of formation of MgO by oxidation of Mg, such that the smut-suppressing metal is configured to form the smut-suppressing oxide that is thermodynamically more favored over MgO on a surface of a weld metal formed from the consumable welding electrode,
   wherein the smut-suppressing metal is present in an amount of 0.05 - 0.50 % by weight of the consumable welding electrode.

2. The consumable welding electrode of Claim 1, wherein the smut-suppressing metal is configured to form the smut-suppressing oxide under equilibrium conditions at a standard Gibbs free energy of formation ($\Delta G°$) of <-192 kcal/gfw and >-215 kcal/gfw at 1600 K, wherein the smut-suppressing metal is preferably selected from the group consisting of beryllium (Be), hafnium (Hf), erbium (Er), strontium (Sr), cerium (Ce) or a combination thereof.

3. The consumable welding electrode of Claim 1, wherein the smut-suppressing metal is configured to form the smut-suppressing oxide under equilibrium conditions at a standard Gibbs free energy of formation ($\Delta G°$) of $\leq$-215 kcal/gfw and >-225 kcal/gfw, wherein the smut-suppressing metal is preferably selected from the group consisting of gadolinium (Gd), dysprosium (Dy), thorium (Th), samarium (Sm), praseodymium (Pr), ytterbium (Yb) or a combination thereof.

4. The consumable welding electrode of Claim 1, wherein the smut-suppressing metal is configured to form the smut-suppressing oxide under equilibrium conditions at a standard Gibbs free energy of formation ($\Delta G°$) of $\leq$-225 kcal/gfw, wherein the smut-suppressing metal is preferably selected from the group consisting of lutetium (Lu), holmium (Ho), calcium (Ca), terbium (Tb), scandium (Sc), thulium (Tm), yttrium (Y), europium (Eu) or a combination thereof.

5. The consumable welding electrode of any of the previous Claims, wherein the smut-suppressing metal is in a compound form selected from an oxide, a halide, a hydroxide, a sulfide, a sulfate, a carbonate, a phosphate, a nitride, a nitrite, a nitride, a carbide, a boride, an aluminide, a telluride or a combination thereof, wherein preferably the compound form is an oxide or a hydroxide.

6. The consumable welding electrode of any of the previous Claims, wherein the consumable welding electrode is configured such that upon forming a weld metal, a layer of smut comprising MgO forms on the weld metal, wherein the consumable welding electrode is configured to suppress formation of the layer of smut such that an amount of Mg in the layer of smut is less than 10% by weight of an amount of Mg in the consumable welding electrode;

   and/or
   wherein the base metal composition further comprises zinc (Zn) and the smut further comprises ZnO, wherein the consumable welding electrode is configured to suppress formation of the layer of smut such that an amount of Zn in the layer of smut is less than 10% of an amount of Zn in the consumable welding electrode.

7. A consumable welding electrode, comprising:

   a base metal composition comprising magnesium (Mg) and at least 70% by weight of aluminum (Al); and
   a smut-suppressing metal selected from the group consisting of calcium (Ca), strontium (Sr), scandium (Sc), beryllium (Be), yttrium (Y), terbium (Tb), europium (Eu), cerium (Ce), praseodymium (Pr), ytterbium (Yb), holmium (Ho), erbium (Er), dysprosium (Dy), samarium (Sm), thorium (Th), lutetium (Lu), thulium (Tm), hafnium (Hf), gadolinium (Gd) or a combination thereof,
   wherein the smut-suppressing metal is present in a compound form selected from an oxide, a halide, a hydroxide, a sulfide, a sulfate, a carbonate, a phosphate, a nitride, a nitrite, a nitride, a carbide, a boride, an aluminide, a telluride or a combination thereof.

8. The consumable welding electrode of Claim 7, wherein the compound form is an oxide or a hydroxide.

9. The consumable welding electrode of Claim 7 or 8, wherein the smut-suppressing metal is present in an amount such that upon forming a weld metal, a layer of smut comprising MgO forms on the weld metal, wherein the consumable welding electrode is configured to suppress formation of the layer of smut such that an amount of Mg in the layer of MgO is less than 10% by weight of an amount of Mg in the consumable welding electrode

and/or

wherein the smut-suppressing metal is present in an amount of 0.05 - 0.50 % by weight of the consumable welding electrode.

10. The consumable welding electrode of any of the Claim 7 - 9, wherein

the smut-suppressing metal is selected from the group consisting of beryllium (Be), hafnium (Hf), erbium (Er), strontium (Sr), cerium (Ce) or a combination thereof;

or

the smut-suppressing metal is selected from the group consisting of gadolinium (Gd), dysprosium (Dy), thorium (Th), samarium (Sm), praseodymium (Pr), ytterbium (Yb) or a combination thereof;

or

the smut-suppressing metal is selected from the group consisting of lutetium (Lu), holmium (Ho), calcium (Ca), terbium (Tb), scandium (Sc), thulium (Tm), yttrium (Y), europium (Eu) or a combination thereof.

11. A consumable welding electrode, comprising:

a base metal composition comprising magnesium (Mg) and at least 70% by weight of aluminum (Al); and

a smut-suppressing metal, wherein a standard free energy change ($\Delta G°$) of formation of a smut-suppressing oxide by oxidation of the smut-suppressing metal under equilibrium conditions at a temperature of 1600K or higher is more negative than a $\Delta G°$ of formation of MgO by oxidation of Mg, such that the smut-suppressing metal is configured to form the smut-suppressing oxide that is thermodynamically more favored over MgO on a surface of a weld metal formed from the consumable welding electrode,

wherein the smut-suppressing metal is present in an amount such that upon forming the weld metal, a layer of smut comprising MgO forms on the weld metal, wherein the consumable welding electrode is configured to suppress formation of the layer of smut such that an amount of Mg in the layer of smut is less than 10% by weight of an amount of Mg in the consumable welding electrode.

12. The consumable welding electrode of Claim 11, wherein the smut-suppressing metal is configured to form the smut-suppressing oxide under equilibrium conditions at a standard Gibbs free energy of formation ($\Delta G°$) of <-192 kcal/gfw and >-215 kcal/gfw at 1600 K, wherein preferably the smut-suppressing metal is selected from the group consisting of beryllium (Be), hafnium (Hf), erbium (Er), strontium (Sr), cerium (Ce) or a combination thereof.

13. The consumable welding electrode of Claim 11, wherein the smut-suppressing metal is configured to form the smut-suppressing oxide under equilibrium conditions at a standard Gibbs free energy of formation ($\Delta G°$) of $\leq$-215 kcal/gfw and >-225 kcal/gfw, wherein preferably the smut-suppressing metal is selected from the group consisting of gadolinium (Gd), dysprosium (Dy), thorium (Th), samarium (Sm), praseodymium (Pr), ytterbium (Yb) or a combination thereof.

14. The consumable welding electrode of Claim 11, wherein the smut-suppressing metal is configured to form the smut-suppressing oxide under equilibrium conditions at a standard Gibbs free energy of formation ($\Delta G°$) of $\leq$-225 kcal/gfw, wherein preferably the smut-suppressing metal is selected from the group consisting of lutetium (Lu), holmium (Ho), calcium (Ca), terbium (Tb), scandium (Sc), thulium (Tm), yttrium (Y), europium (Eu) or a combination thereof; and/or wherein the smut-suppressing metal is present in a compound form selected from an oxide, a halide, a hydroxide, a sulfide, a sulfate, a carbonate, a phosphate, a nitride, a nitrite, a nitride, a carbide, a boride, an aluminide, a telluride or a combination thereof, wherein preferably the compound form is an oxide or a hydroxide.

15. The consumable welding electrode of any of the Claims 11-14, wherein the base metal composition further comprises zinc (Zn) and the smut further comprises ZnO, wherein the consumable welding electrode is configured to suppress formation of the layer of smut such that an amount of Zn in the layer of smut is less than 10% by weight of an amount of Zn in the consumable welding electrode;

and/or
wherein the smut-suppressing metal

- is present in an amount and form such that a weld metal formed using the consumable welding electrode has a layer of smut comprising MgO formed thereon that is at least 10% by weight less relative to a layer of smut formed on a weld metal formed under substantially the same welding conditions using a consumable welding electrode that has the same base metal composition without the smut-suppressing metal;
- has a boiling point that is higher than one or more of Mg, Zn and Al; and/or wherein the smut-suppressing metal is present in an amount that exceeds 1% of the amount of Mg in the consumable welding electrode;

and/or
wherein the consumable welding electrode comprises a core wire comprising the base metal composition and a coating comprising the smut-suppressing metal surrounding the core wire; and/or wherein the consumable welding electrode is a cored wire comprising a core and a sheath, wherein the core comprises the smut-suppressing metal and the sheath comprises the base metal composition;
and/or
wherein the consumable welding electrode is solid wire comprising a homogenous mixture of the base metal composition and the smut-suppressing metal.

16  
14  
12  
14  
16

FIG. 1A

FIG. 1B

FIG. 2

FIG. 3A

FIG. 3B

40A

## FIG. 4A

40B

41A

## FIG. 4B

42

43

44

FIG. 4C

46

47

OD

ID

49

48

FIG. 4D

providing a consumable welding electrode comprising an aluminum-based base metal composition and a smut-suppressing metal ⟩ 54

generating an arc to form a weld metal using the consumable welding electrode, wherein a peak temperature of the arc exceeds an evaporation temperature of the base metal composition ⟩ 58

# FIG. 5

110

116

112  126  124

114

122

118

134

112

128

120

# FIG. 6

Europäisches
Patentamt

European
Patent Office

Office européen
des brevets

# EUROPEAN SEARCH REPORT

Application Number

EP 21 19 8276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 282 687 A (ANHUI FEIHU WELDING IND CO LTD) 4 January 2017 (2017-01-04) * paragraphs [0015] – [0040]; examples 1-5 * ----- | 1-15 | INV. B23K35/02 B23K35/28 C22C21/06 C22C21/00 |
| X | US 2010/129683 A1 (LIN JEN C [US] ET AL) 27 May 2010 (2010-05-27) * paragraphs [0097] – [0099]; tables 1,2 * ----- | 1-15 | |
| X | EP 3 323 546 A1 (LINCOLN GLOBAL INC [US]) 23 May 2018 (2018-05-23) * paragraphs [0020] – [0026]; claims 1-3; figures 2-4 * ----- | 1-12,14, 15 | |
| X | CN 105 345 309 B (BEIJING INST AERONAUTICAL MATERIALS AVIAT INDUSTRY CORP CHINA) 1 December 2017 (2017-12-01) * paragraphs [0016] – [0028]; examples 1-4 * ----- | 1,4-12, 14,15 | |
| X | CN 110 396 627 A (HUNAN ORIENTAL SCANDIUM CO LTD) 1 November 2019 (2019-11-01) * examples 1-8 and comparative examples 1-3; paragraphs [0052] – [0106] * ----- | 1,4-12, 14 | TECHNICAL FIELDS SEARCHED (IPC) B23K C22C |
| X | CN 101 824 567 A (GUILIN YINJIAN WELDING MATERIALS CO LTD) 8 September 2010 (2010-09-08) * paragraphs [0016] – [0040]; examples 1-4 * ----- | 1,4-12, 14 | |
| X | RU 2 237 097 C1 (AVIATION MATERIALS RES INST) 27 September 2004 (2004-09-27) * page 3, column 1, line 8 – column 2, line 37; examples 1-8; table 1 * ----- | 1,4-12, 14 | |
| | -/-- | | |

The present search report has been drawn up for all claims

| Place of search | Date of completion of the search | Examiner |
|---|---|---|
| The Hague | 3 February 2022 | Barenbrug-van Druten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 21 19 8276**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RU 2 265 674 C1 (AVIATION MATERIALS RES INST) 10 December 2005 (2005-12-10) * page 4, lines 36-53; examples 1-6; table 1 *<br><br>----- | 1,4-12, 14 | |

**TECHNICAL FIELDS SEARCHED (IPC)**

The present search report has been drawn up for all claims

| Place of search | Date of completion of the search | Examiner |
|---|---|---|
| The Hague | 3 February 2022 | Barenbrug-van Druten |

EPO FORM 1503 03.82 (P04C01)

## ANNEX TO THE EUROPEAN SEARCH REPORT
## ON EUROPEAN PATENT APPLICATION NO.

EP 21 19 8276

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2022

| Patent document cited in search report | | Publication date | Patent family member(s) | | Publication date |
|---|---|---|---|---|---|
| CN 106282687 | A | 04-01-2017 | NONE | | |
| US 2010129683 | A1 | 27-05-2010 | US | 2010129683 A1 | 27-05-2010 |
| | | | US | 2015072170 A1 | 12-03-2015 |
| | | | WO | 2010060021 A1 | 27-05-2010 |
| EP 3323546 | A1 | 23-05-2018 | CN | 108067761 A | 25-05-2018 |
| | | | EP | 3323546 A1 | 23-05-2018 |
| | | | JP | 2018079506 A | 24-05-2018 |
| | | | US | 2018133844 A1 | 17-05-2018 |
| CN 105345309 | B | 01-12-2017 | NONE | | |
| CN 110396627 | A | 01-11-2019 | NONE | | |
| CN 101824567 | A | 08-09-2010 | NONE | | |
| RU 2237097 | C1 | 27-09-2004 | NONE | | |
| RU 2265674 | C1 | 10-12-2005 | NONE | | |

EPO FORM P0459

For more details about this annex : see Official Journal of the European Patent Office, No. 12/82